# EUROPEAN PATENT APPLICATION

(11) **EP 3 503 492 A1**
(43) Date of publication of application: **26.06.2019**
(21) Application number: 17210099.2
(22) Date of filing: 22.12.2017
(51) Int. Cl.: H04L 29/06, H04W 12/06, G06F 21/32, H04W 8/04

(54) **TECHNIQUES FOR ESTABLISHING DATA COMMUNICATION BASED ON USER IDENTIFICATION**

(71) Applicant: Deutsche Telekom AG, 53113 Bonn (DE)
(72) Inventor: Lauster, Reinhard, 3100 St. Pölten (AT)
(74) Representative: Patentship Patentanwaltsgesellschaft mbH

(57) **Abstract**

The disclosure relates to a communication system (200), in particular a 5G communication system, comprising: a network access entity (252), in particular an AMF entity of a network slice (250) of the communication system (200), configured to receive a communication request message (205) from a user equipment (UE), wherein the communication request message (205) comprises an identifier (203) of the UE (202) and a user identifier (204) identifying a user of the UE (202); and a data repository (260), in particular a unified data repository (UDR) of the network slice (250), configured to receive an identification request message (254) from the network access entity (252), wherein the identification request message (254) comprises the identifier (203) of the UE (202) and the user identifier (204), wherein the data repository (260) is configured to provide a verification of the UE (202) with the user identifier (204) based on a communication profile indicating a relation of the user identifier (204) with the identifier (203) of the UE (202), wherein the network access entity (252) is configured to enable establishment of a communication link with the UE based on a successful verification of the UE (202) with the user identifier (204).

## Description

### TECHNICAL FIELD

The invention relates to techniques for establishing data communication based on User Identification. The invention further relates to user-related communication profiles, in particular in 5G communication systems.

### BACKGROUND

Operators worldwide are currently preparing for the transition to 5G networks. To support the wide range of services planned for 5G, a new core network known as Next-Generation Core or NG Core is planned. Its structure is described, for example, in the technical specification TS 23.501 (V1.5.0) of 3GPP. It specifies requirements for designing and operating a 5G service-oriented core network.

The service-oriented 5G core network is based on the premise that 5G shall support very different services with very different performance requirements. Three different service categories for 5G are identified: 1) Enhanced Mobile Broadband (eMBB), 2) Massive machine-type communication (mMTC, also known as loT, Internet of Things) and 3) Ultra-Low Latency (UR-LLC) communication.

This includes use cases or application scenarios such as industrial control, augmented reality (AR) or augmented reality / virtual reality (VR) and networked cars. The goal is to use end-to-end network slices to map and support these diverse services and technologies on a physical network infrastructure. In this way, operators can operate new services in foreign network sectors and insert their networks into new industrial value chains.

Typically, communication profiles are associated with policies associated with a subscription of a user equipment (UE) (e.g. by IMSI, elD, etc.), i.e. a subscription that is used (registered) by a UE. In a connection setup, the communication profiles are retrieved from a database and used for communication. The problem, however, is that the same UE that uses a subscription can be used by multiple users, such as children and parents or different users of a company smartphone.

### SUMMARY OF THE INVENTION

It is the object of the present invention to provide a concept for a secure communication establishment, in particular for scenarios as described above related to 5G communication systems.

The foregoing and other objects are achieved by the subject matter of the independent claims. Further implementation forms are apparent from the dependent claims, the description and the figures.

The disclosure is based on the following idea: When establishing a communication connection with the NAS message via the N1 or S1 interface, the UE also transmits the user ID in addition to the subscriber ID (IMSI). The user ID can be for example a name with password or a biometric feature (such as fingerprint, iris scan, voice sample, etc.). The end user ID can be read out either by the UE itself (e.g. using camera, fingerprint, user name / password, etc.) or from an electronic identification document or from a chip. In the unified data repository (UDR), the user is identified by, for example, a comparison with a reference ID. Based on the tuple (subscriber ID, user ID), this can be linked to the subscriber (IMSI) and the communication profile assigned to the person can be determined.

The methods and systems presented below may be of various types. The individual elements described may be realized by hardware or software components, for example electronic components that can be manufactured by various technologies and include, for example, semiconductor chips, ASICs, microprocessors, digital signal processors, integrated electrical circuits, electro-optical circuits and/or passive components.

The devices, systems and methods presented below are capable of transmitting information over a communication network. The term communication network or communication network refers to the technical infrastructure on which the transmission of signals takes place. The communication network essentially comprises the switching network in which the transmission and switching of the signals takes place between the stationary devices and platforms of the mobile radio network or fixed network, and the access network in which the transmission of the signals takes place between a network access device and the communication terminal. The communication network can comprise both components of a mobile radio network as well as components of a fixed network. In the mobile network, the access network is also referred to as an air interface and includes, for example, a base station (NodeB, eNodeB, radio cell) with mobile antenna to establish the communication to a communication terminal as described above, for example, a mobile phone or a mobile device with mobile adapter or a machine terminal. In the fixed network, the access network includes, for example, a DSLAM (digital subscriber line access multiplexer) to connect the communication terminals of multiple participants based on wires. Via the switching network the communication can be transferred to other networks, for example other network operators, e.g. foreign networks.

The communication networks presented below may include various technologies and network standards, for example according to the 5G system architecture. This includes the concept of network slicing. Network slicing is a form of virtual network architecture that uses the same principles as software-defined networking (SDN) and network functions virtualization (NFV) in fixed networks. SDN and NFV are used to provide greater network flexibility by partitioning traditional network architectures into virtual elements that can be linked together, even through software.

Network slicing allows multiple virtual networks to be created on a common physical infrastructure. The virtual networks are then adapted to the specific needs of applications, services, devices, customers or operators.

Each virtual network (network slice) comprises an independent set of logical network functions that support the needs of the particular use case, where the term "logical" refers to software.

Each of these virtual networks or network slices is optimized to provide the resources and network topology for the particular service and traffic using the corresponding segment. Features such as speed, capacity, connectivity, and coverage are assigned to meet the specific needs of each use case, but functional components can also be shared across different network slices.

Each network slice can be completely isolated, so that no network slice can disturb the traffic in another network slice. This reduces the risk of introducing and operating new services and also supports migration as new technologies or architectures can be started on isolated slices. It also affects security, because if a cyber-attack breaks a slice, the attack is contained and cannot spread beyond that slice.

Each network slice is configured with its own network architecture, engineering mechanism, and network deployment. To do this, each network slice can receive management capabilities that can be controlled by the network operator or the customer depending on the application. The network slices can be independently managed and orchestrated.

The techniques described herein can also be applied in roaming scenarios. In such a roaming scenario, when starting operation of the communication terminal, i.e. the mobile terminal, the machine terminal such as of the self-driven car or drone, also denoted herein as user equipment (UE), currently a complex procedure is necessary when the UE is located in the visited network or in an external communication network. This procedure is necessary in order to fetch the subscriber-specific data of the UE from the home communication network, also denoted as home PLMN (Public Land Mobile Network) and to inform the UE. These subscriber-specific data of the UE can for example include registration and/or authentication data of the UE in the visited PLMN, such as identification and telephone number, e.g. IMSI (International Mobile Subscriber Identity) or IMEI (International Mobile Equipment Identity) or SIM ID (Subscriber Identity Module Identity). Further, for logging into the visited network, also referred to as visited PLMN, allowed capabilities and/or policies of the visited PLMN, e.g. network technology, support for certain services, etc. are required.

According to a first aspect the invention relates to a communication system, in particular a 5G communication system, comprising: a network access entity, in particular an AMF entity of a network slice of the communication system, configured to receive a communication request message from a user equipment (UE), wherein the communication request message comprises an identifier of the UE and a user identifier identifying a user of the UE; and a data repository, in particular a unified data repository (UDR) of the network slice, configured to receive an identification request message from the network access entity, wherein the identification request message comprises the identifier of the UE and the user identifier, wherein the data repository is configured to provide a verification of the UE with the user identifier based on a communication profile indicating a relation of the user identifier with the identifier of the UE, wherein the network access entity is configured to enable establishment of a communication link with the UE based on a successful verification of the UE with the user identifier.

Such a communication system provides, due to the additional user identifier that identifies the user of the UE, secure communication establishment, in particular for scenarios as described above related to 5G communication systems. The communication link with the UE is only established for the true, i.e. verified, user. Hence, misuse of the communication terminal, i.e. the UE, can be avoided as each time a communication with the UE is requested the user has to verify its identity. This provides safe communication and protects the user against misuse including theft protection.

In an exemplary implementation form of the communication system, the network access entity is configured to deny processing a communication request message with an identifier of the UE for which no registration profile is stored in the data repository.

This provides the advantage that no communication establishment is possible for a nonregistered UE, i.e. a user equipment which identifier, i.e UE ID, is not included in the registration profile. This improves safety, as both, communication profile with user identifier and registration profile with UE ID have to be available in the data repository.

In an exemplary implementation form of the communication system, the data repository is configured to store registration profiles of registered UEs independently from communication profiles of registered users.

This provide the advantage of higher security as both, communication profile with user identifier and registration profile with UE ID are independently stored in the data repository, e.g. at separate memory addresses.

In an exemplary implementation form, the communication system comprises a session initiation network entity, in particular an SMF entity of the network slice, wherein the session initiation network entity is configured to establish a communication session based on the user identifier.

This provides the advantage of additional security as the communication session is only established for the verified user identifier.

In an exemplary implementation form of the communication system, the session initiation network entity is configured to establish the communication session based on a policy obtained from the data repository, in particular from a policy control function (PCF) of the UDR of the network slice, which policy is related to the user identifier.

This provides the advantage that by using the policy different communication profiles can be adjusted, for example safety-related profiles and non-safety related profiles. This improves safety of communication.

In an exemplary implementation form of the communication system, the user identifier comprises at least one of the following: a picture of the user, in particular an iris-scan of the user, a speech sample of the user, a fingerprint of the user, a secret key, a username and a password, a speech sample of the user.

This provides the advantage that different ways to prove the identity of the user can be implemented resulting in higher flexibility and comfort for the user.

In an exemplary implementation form of the communication system, the communication profile is predetermined by contract or preconfigured by the user via a secure user interface with the data repository.

This provides the advantage that in the first case communication is protected by contract, in the second case that the user has a safe method to change his profile via the secure user interface. Hence, these features provide high safety and enough flexibility.

In an exemplary implementation form of the communication system, the network access entity is configured to enable establishment of a communication link with the UE based on a default communication profile if the verification of the UE with the user identifier failed.

This provides the advantage that by using the default communication profile communication with a lesser degree of service quality can be achieved, for example, only basic services may be used that produce no additional costs for the user.

In an exemplary implementation form of the communication system, the network access entity is configured to disable establishment of a communication link with the UE and/or to indicate an alert and/or warning message if the verification of the UE with the user identifier failed.

This provides the advantage that theft protection can be implemented and misuse of the UE can be avoided.

In an exemplary implementation form of the communication system, the communication profile comprises a mapping of at least one user identifier with the identifier of the UE.

This provides the advantage that high flexibility can be provided for communication. More than one user identifier, e.g. the other family members or colleagues of the user can be identified in the communication profile. It is also possible that one user is allowed to user multiple UEs by such a mapping.

According to a second aspect, the invention relates to a method for enabling establishment of a communication link with a User Equipment (UE) based on User Identification, the method comprising: transmitting, by a user equipment (UE), a communication request message to an access network entity, in particular an AMF entity of a network slice of a communication system, wherein the communication request message comprises an identifier of the UE and a user identifier identifying a user of the UE; transmitting, by the access network entity, an identification request message to a data repository, in particular a unified data repository (UDR) of the network slice, wherein the identification request message comprises the identifier of the UE and the user identifier; providing a verification of the UE with the user identifier based on a communication profile indicating a relation of the user identifier with the identifier of the UE; and enabling establishment of a communication link with the UE based on a successful verification of the UE with the user identifier.

Such a communication method provides, due to the additional user identifier that identifies the user of the UE, secure communication establishment, in particular for scenarios as described above related to 5G communication systems. The communication link with the UE is only established for the true, i.e. verified, user. Hence, misuse of the communication terminal, i.e. the UE, can be avoided as each time a communication with the UE is requested the user has to verify its identity. This provides safe communication and protects the user against misuse including theft protection.

In an exemplary implementation form, the method comprises: establishing a communication session with the UE based on the user identifier.

This provides additional security for communication as the user has to provide his user ID for communication setup.

In an exemplary implementation form, the method comprises: denying processing of a communication request message with an identifier of the UE for which no registration profile is stored in the data repository.

This provides the advantage that no communication establishment is possible for a nonregistered UE, i.e. a user equipment which identifier, i.e UE ID, is not included in the registration profile. This improves safety, as both, communication profile with user identifier and registration profile with UE ID have to be available in the data repository.

According to a third aspect, the invention relates to a user equipment (UE), comprising a processor, configured to: transmit a communication request message to an access network entity, in particular an AMF entity of a network slice of a communication system, wherein the communication request message comprises an identifier of the UE and a user identifier identifying a user of the UE; and enable establishment of a communication link with the access network entity based on a response from the access network entity indicating a successful verification of the UE with the user identifier.

Such a mobile terminal or UE provides, due to the additional user identifier that identifies the user of the UE, secure communication establishment, in particular for scenarios as described above related to 5G communication systems. The communication link with the UE is only established for the true, i.e. verified, user. Hence, misuse of the communication terminal, i.e. the UE, can be avoided as each time a communication with the UE is requested the user has to verify its identity. This provides safe communication and protects the user against misuse including theft protection.

In an exemplary implementation form, the UE comprises: a camera configured to provide the user identifier based on a picture of the user, in particular an iris-scan of the user; and/or a microphone configured to provide the user identifier based on a speech sample of the user; and/or a touchpad configured to provide the user identifier based on a fingerprint of the user; and/or an input configured to provide the user identifier based on a secret key or a username and a password; and/or a scanner configured to provide the user identifier based on a scan of an identity document, in particular an electronic identity document or based on a scan of a chip.

This provides the advantage that such a UE allows different ways to prove the identity of the user. These implementations result in higher flexibility and comfort for the user.

According to a fourth aspect, the invention relates to a network access entity, in particular an AMF entity of a network slice of a communication system, comprising a processor configured to: receive a communication request message from a user equipment (UE), wherein the communication request message comprises an identifier of the UE and a user identifier identifying a user of the UE; transmit an identification request message to a data repository, in particular a unified data repository (UDR) of the network slice, wherein the identification request message comprises the identifier of the UE and the user identifier; obtain a verification of the UE with the user identifier from the data repository; and enable establishment of a communication link with the UE based on a successful verification.

Such a network access entity provides, due to the additional user identifier that identifies the user of the UE, secure communication establishment, in particular for scenarios as described above related to 5G communication systems. The communication link with the UE is only established for the true, i.e. verified, user. Hence, misuse of the communication terminal, i.e. the UE, can be avoided as each time a communication with the UE is requested the user has to verify its identity. This provides safe communication and protects the user against misuse including theft protection.

In an exemplary implementation form of the network access entity, the processor is configured to deny processing a communication request message with an identifier of the UE for which no registration profile is stored in the data repository.

This provides the advantage that no communication establishment is possible for a nonregistered UE, i.e. a user equipment which identifier, i.e UE ID, is not included in the registration profile. This improves safety, as both, communication profile with user identifier and registration profile with UE ID have to be available in the data repository.

According to a fifth aspect the invention relates to a computer program product comprising program code for performing the method according to the first aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a system architecture of a 5G communication network 100;
Fig. 2 shows a schematic diagram illustrating an exemplary communication system 200 according to the disclosure with a network access entity 252, e.g. an AFM entity of a network slice 250 of the communication system 200, a data repository 260 and a user equipment (UE) 202;
Fig. 3 shows a block diagram of an exemplary network access network entity 300 according to the disclosure, e.g. an AFM entity of a network slice 250 of the communication system 200; and
Fig. 4 shows a schematic diagram illustrating an exemplary method 400 for enabling establishment of a communication link with a User Equipment (UE) based on User Identification according to the disclosure.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The following describes network entities such as network access entities and functions of such a network access entity or radio access network (RAN) entities. The network access entity enables access and mobility management in the communication network. Via the network access entity, communication terminals with their identity (UE ID) can register in the communication network and receive the permission to set up a communication connection. For example, in the 5G communication network, the network access entity may be an AMF (Access and Mobility Management Function) representing the access and mobility management function. This manages the access and mobility control. The AMF may also include network slice selection functionality. For wireless access, mobility management is not needed. The network access entity may be, for example, an MME (mobility management entity) in the 4G communication network. The MME is a network component of the LTE (Long Term Evolution) mobile radio standard, which performs the functions of paging to set up calls and generally communication links as well as signaling for control purposes. The MME forms the link between core network and access network. The MME manages the locations of all mobile communication terminals in the radio cells connected to it. In the LTE system, several cells are usually combined to form a tracking area. The management area of an MME can be divided into several tracking areas.

The radio access network (RAN) is part of a mobile telecommunication system. It implements a radio access technology (RAT). Conceptually, it resides between a device such as a mobile phone, a computer, or any remotely controlled machine and provides connection with its core network (CN). Depending on the standard, mobile phones and other wireless connected devices are varyingly known as user equipment (UE), terminal equipment, mobile station (MS), etc. RAN functionality is typically provided by a RAN entity, e.g. a silicon chip, residing in both the core network as well as the user equipment. Examples of radio access network types are GERAN, the GSM radio access network including EDGE packet radio services, UTRAN, the UMTS radio access network, E-UTRAN, the LTE radio access network and the 5G RAN. The RAN entity can for example include a base station, e.g. a NodeB or and eNodeB or a 5G capable radio cell.

The network access entity further provides the technical function of first establishing a security relationship with a previously unknown security device, in order to then be able to install security elements (keys) in the device itself and in the network application function (NAF) of the network access function. For example, the Diameter and Hypertext Transfer Protocol (http) protocols can be used. For example, SOAP may be used between BSF and NAF instead of diameter.

Involved in the maintenance of such a generic security relationship are the following functional elements: terminal, e.g. a mobile phone, i.e. User Equipment (UE), which wants to use a particular service, application server that provides the service, e.g. for Mobile TV, VoLTE, VoIP, FTP data transfer, media streaming, Internet browsing, etc., Network Application Function (NAF), the network access entity itself, which establishes a security relationship between UE and NAF and a database of the home network, e.g. HSS Home Subscriber Server (HSS) or UDR, unified data repository of the (mobile) network provider, which manages the respective user-specific profiles of its terminal users.

The network access entity network access feature is consulted by the application server (NAF) after a terminal has requested service access from it. Since the application server does not yet know the terminal at this time, it first refers this to the network access function. The terminal and the network access function now authenticate to each other; this can be done, for example, by means of the AKA protocol (Authentication and Key Agreement) and by inquiring the network access function to the Home Subscriber Server (HSS) or the UDR database of the home network. Subsequently, the network access function and the terminal (UE) agree on a session key to be used for encrypted data exchange with the application server (NAF). If the terminal now again turns to the application server, it can obtain both the session key and subscriber-specific data from the network access function and start the data exchange with the terminal (UE). The appropriate session keys are used for cryptographic protection.

The security relationship itself between terminal and network access entity never leaves the sovereignty of the (mobile) network operator, only data derived from this security relationship (key) can be queried and used by applications.

In particular, the network entities described in this disclosure are intended to facilitate the serving of an emergency call, in particular in the roaming scenario for establishment of a roaming connection of the communication terminal, as described below in this disclosure.

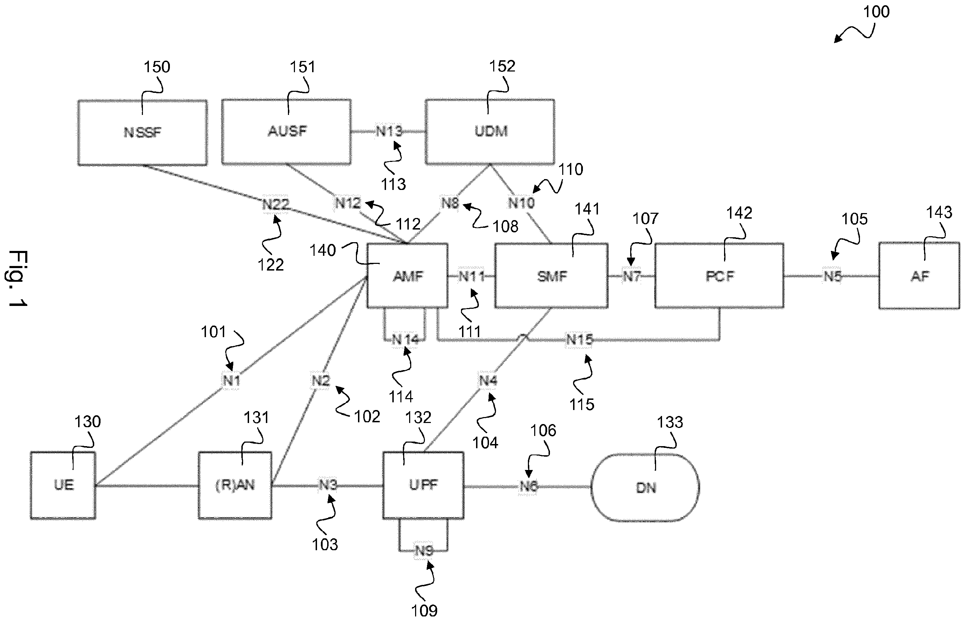

Fig. 1 shows a schematic diagram illustrating a system architecture of a 5G communication network 100. The 5G system architecture 100 comprises the network functions illustrated in the individual blocks of Figure 1.

The UE (User Equipment) block 130 represents the user equipment or client terminal or mobile communication device which can be operated by the subscriber to initiate communication in the 5G network, i.e. starting a communication (mobile originating, MO) or accepting (mobile terminating, MT). The UE can also initiate communication without user interaction, e.g. it can be a machine terminal, e.g. for a car or a robot or other device.

The block (R)AN ((radio) access network) 131 represents the (radio) access network by which the UE 130 obtains access to the 5G communication network. The interface between UE 130 and (R)AN is either an air interface when the access network 131 is a wireless network or wired when the access network is a wired network.

The Access and Mobility Management Function (AMF) block 140 represents the access and mobility management function. It manages the access and mobility functions of the UE. The AMF may also include network slice selection functionality. For wireless access, mobility management is not needed.

The Session Management Function (SMF) block 141 represents the session management function. It sets up sessions and manages them according to the network policy.

The User Plane Function (UPF) block 132 represents the User Plane function. UPFs can be applied in various configurations and locations, according to the service type.

The Policy Control Function (PCF) block 142 represents the policy control function. It provides a policy framework that includes network slicing, roaming, and mobility management. This corresponds to the functionality of a PCRF in 4G systems.

The block UDM (Unified Data Management) 152 provides a shared data management. This saves subscriber data and profiles. This is equivalent to the functionality of an HSS in 4G systems, but is used for both mobile and wired access in the NG Core network.

The block DN (Data Network) 133 provides the data network over which data is transmitted, e.g. from one UE to another UE.

The block AUSF (Authentication Server Function) 151 provides authentication functionality with which the subscriber or the UE can log on to the network.

The AF (Application Function) block 151 provides application functions that enable certain services to be executed.

The NSSF block (Network Slice Selection Function) 150 provides functions to select particular network slices.

The 5G system architecture shown in Figure 1 represents the structure of the NG (Next Generation) network, which consists of network functions (NFs) and reference points connecting the NFs. The UE 130 is connected to either a Radio Access Network (RAN) 131 or an Access Network (AN) 131. In addition, the UE 130 is connected to the Access and Mobility Function (AMF) 140. The RAN 131 represents a base station using new RAT and advanced LTE technologies, while the AN 131 is a general base station with non-3GPP access, e.g. a WiFi Access Point. The Next Generation core network 100 consists of various network functions (NFs). In Figure 1, there are seven Next Generation core NFs, namely (1) AMF 140, (2) Session Management Function (SMF) 141, (3) Policy Control Function (PCF) 142, (4) Application Function (AF) 143, (5) Authentication Server Function (AUSF) 151, (6) User Plane Function (UPF) 132, and (7) User Data Management (UDM) 152.

The network function (NF) represents the processing function inherited from 3GPP in NextGen or NG. It has both functional behavior and serves as an interface. An NF can either be implemented as a network element (or network entity) on dedicated hardware, as a software instance on dedicated hardware, or instantiated as a virtualized function on a suitable platform, e.g. B. a cloud infrastructure.

The AMF 140 provides UE-based authentication, authorization, mobility management, etc. A UE 130 is basically connected to a single AMF 140 because the AMF 140 is independent of the access technology. That means, also a UE 130 with multiple access technologies is only connected to a single AMF 140.

The SMF 141 is responsible for session management and assigns IP addresses to the UEs 130. In addition, the SMF 141 selects the UPF 132 and controls the UPF 132 for data transfer. If a UE 130 has multiple sessions, different SMFs 141 may be associated with each session to individually control them and possibly provide multiple functionalities per session.

The AF 143 provides information about the packet flow and provides it to the PCF 142, which is responsible for policy control to ensure Quality of Service (QoS). Based on this information, PCF 142 will determine the Mobility and Session Management policies for the AMF 140 and SMF 141 to function properly.

The AUSF 151 stores data for authentication of the UE 130 while the UDM 152 stores subscription data of the UE 130. The data network DN 133, which is not part of the NG core network 100, provides Internet access and operator services.

The architectural reference point view can be used to represent detailed message flows in Next Generation (NG) standardization. The reference point Next Generation NG1 101 is defined as transmission signaling between the UE 130 and the AMF 140. The reference points for the connection between the AN 131 and the AMF 140 and between the AN 131 and the UPF 132 are referred to as NG 2 102 and NG3 103. There is no reference point between the AN 131 and the SMF 141, but there is a reference point, NG11 111, between the AMF 140 and the SMF 141. This means that the SMF 141 is controlled by the AMF 140. NG4 104 is used by the SMF 141 and the UPF 132 to allow the UPF 132 to be set with the generated control signal from the SMF 141, and the UPF 132 can report its status to the SMF 141. NG9 109 is the reference point for the connection between different UPFs 132 and NG14 114 is the reference point between different AMFs 140. NG15 115 and NG7 107 are defined in order for PCF 142 to apply its policies to AMF 140 and SMF 141, respectively. NG12 112 is required for the AMF 140 to perform authentication of the UE 130. NG8 108 and NG10 110 are defined because the subscription data of UE 130 is needed by AMF 140 and SMF 141.

The Next Generation Network 100 aims to realize a separation of user and control or control level. The user level transmits the user traffic, while the control level transmits the signaling on the network. In Figure 1, the UPF 132 is in the user plane and all other network functions, i.e. AMF 140, SMF 141, PCF 142, AF 143, AUS 151 and UDM 152 are in the control plane. Separation of user and control planes guarantees independent scaling of resources at each network level. The separation also allows the provision of UPFs 132 in a distributed manner separate from the functions of the control plane.

The NG Architecture 100 consists of modularized functions. For example, AMF 140 and SMF 141 are independent functions in the control plane. Separate AMF 140 and SMF 141 allow independent development and scaling. Other control plane functions such as PCF 142 and AUSF 151 may be separated as shown in Figure 1. The modularized functional design illustrated in Figure 1 also enables the Next Generation Network 100 to flexibly support various services.

Each network function interacts directly with another NF. At the control level, a series of interactions between two NFs are defined as a service, so that they can be reused. This service allows support for modularity. The user level supports interactions such as forwarding operations between different UPFs 132.

The Next Generation Network 100 supports roaming similar to EPS (Enhanced Packet Switching). There are two types of application scenarios, Home Routed (HR) and Local Breakout (LBO). The structures that support roaming and the corresponding session management according to the concept presented here will be described in more detail below.

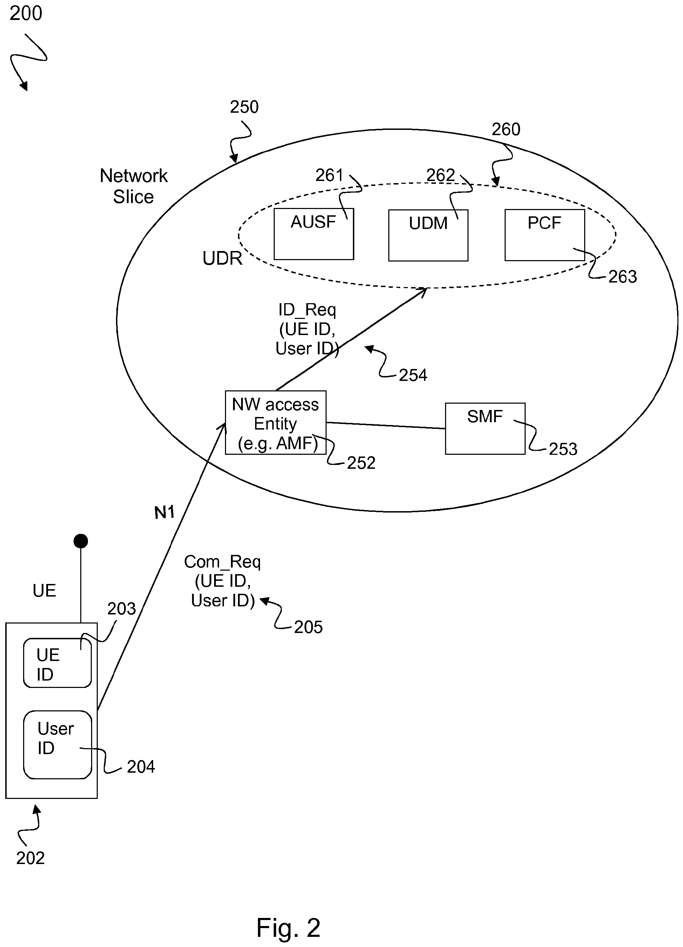

Fig. 2 shows a schematic diagram illustrating an exemplary communication system 200 according to the disclosure with a network access entity 252, e.g. an AFM entity of a network slice 250 of the communication system 200, a data repository 260 and a user equipment (UE) 202.

The communication network 200 also referred to as communication system 200, e.g. a public land mobile network (PLMN), includes one or more network slices 250 for serving a plurality of user equipments (UE) 202 (for simplicity reasons only one UE is depicted in Fig. 2). The network slice 250 can have a network structure and functionality as described above with respect to Fig. 1 for the 5G system architecture. The communication network 200 can have a plurality of such network slices 250, however for simplicity reasons, only one network slice 250 is shown here. The network slice 250 includes a radio network access (RAN) entity (not shown in Fig. 2) and a network access entity 252 such as an AMF entity 252. The network slice 250 further comprises an SMF entity 253, e.g. as described above with respect to Fig. 1, and can include further network entities as described above with respect to Fig. 1. The network slice 250 further includes a data repository 260, e.g. a unified data repository (UDR) as described above with respect to Fig. 1. This UDR 260 can include an AUSF entity 261, a UDM entity 262 and a PCF entity 263 as described above with respect to Fig. 1.

The UE 202 can connect to the network access entity 252 by a radio interface, in particular the N1 interface according to Fig. 1. The UE 202 includes an UE identification, e.g. a SIM module with SIM ID or any other hardware identity such as IMEI, IMSI, etc. The UE 202 further includes a module that is capable to provide a user identifier (User ID) 204, that is an identification of a (current) user using the UE 202. When different user use the UE, the module can provide different user IDs. For example, the module can be a camera for providing the user identifier 204 based on a picture of the user, in particular an iris-scan of the user and/or a microphone for providing the user identifier 204 based on a speech sample of the user and/or a touchpad for providing the user identifier 204 based on a fingerprint of the user and/or an input for providing the user identifier 204 based on a secret key or a username and a password and/or a scanner for providing the user identifier 204 based on a scan of an identity document, in particular an electronic identity document or based on a scan of a chip.

The communication system 200 may be a 5G communication system, e.g. as described above with respect to Fig. 1. The network access entity 252 may be an AMF entity of a network slice 250 of the communication system 200, e.g. an AMF entity 140 as described above with respect to Fig. 1. Alternatively, the network access entity 252 may be a radio access network (RAN) entity of a network slice 250 of the communication system 200, e.g. a RAN entity 131 as described above with respect to Fig. 1.

The network access entity 252 is configured to receive a communication request message 205 from the user equipment (UE). The communication request message 205 comprises an identifier 203 of the UE 202, e.g. an IMSI, an IMEI, a SIM ID or another hardware identifier, a MAC address or an IP address or another network identifier and additionally a user identifier 204 for identifying a user of the UE 202, e.g. biometric data of the user.

The data repository 260 may be a unified data repository (UDR) of the network slice 250, e.g. a UDR including an AUSF entity 261, a UDM entity 262 and a PCF entity 263 according to the respective entities described above with respect to Fig. 1. Alternatively, the data repository 260 may be a data base, e.g. a HSS or a HLR database or any other database storing subscriber profiles. The data repository 260 is configured to receive an identification request message 254 from the network access entity 252. The identification request message 254 comprises the identifier 203 of the UE 202 and the user identifier 204. The data repository 260 is configured to provide a verification of the UE 203 with the user identifier 204 based on a communication profile indicating a relation of the user identifier 204 with the identifier 203 of the UE 202. For example the verification can be provided by a comparison of the identifier 203 of the UE 202 (UE ID) and the user identifier with a reference subscriber profile stored in the data repository 260. The comparison may be performed by a controller of the data repository (260) or alternatively by the network access entity 252, e.g. by the AMF entity 252. The network access entity 252 is configured to enable establishment of a communication link with the UE 202 based on a successful verification of the UE 203 with the user identifier 204. A successful verification may be delivered if the corresponding entry of identifier 203 of the UE 202 and the user identifier exists in the data repository 260.

The network access entity 252 may deny processing a communication request message 205 with an identifier 203 of the UE 202 for which no registration profile is stored in the data repository 260 or if a communication profile is stored in the data repository 260 for the UE ID assigned to another user identifier. A registration profile is a profile indicating one or more UEs that are registered in the communication network. A communication profile is a profile indicating an assignment of one or more users (characterized by their user IDs) to one or more UEs. If a mapping of a specific user to a specific UE exists in the data repository, the specific use is allowed to use the specific UE for establishing a communication link. Otherwise, the specific user is rejected.

The data repository 260 can store registration profiles of registered UEs independently from communication profiles of registered users. I.e. there may exist communication profiles for indicating allowance for communication of a user with a specific UE, and there may independently exist registration profiles allowing specific UEs to start communication in the network.

The communication system 200 may further include a session initiation network entity 253, e.g. an SMF entity 253 of the network slice 250. Such SMF entity 253 may correspond to the SMF entity 141 described above with respect to Fig. 1. The session initiation network entity 253 is configured to establish a communication session based on the user identifier 204. The communication session may also be established based on the UE ID. This SMF entity 253 provides additional security since the session may only be started if a valid communication profile is stored in the data repository 260.

The session initiation network entity 253 may be configured to establish the communication session based on a policy obtained from the data repository 260, e.g. from a policy control function (PCF) 263 of the UDR 260 of the network slice 250, which policy is related to the user identifier 204. Different policies may be defined depending on the user identity, for example for an original user identifier 204, e.g. an owner of the UE 202, the policy may enable more services than for subsequent user identifiers, e.g. for parents versus children.

The user identifier 204 may for example include one or more of the following: a picture of the user, in particular an iris-scan of the user, a speech sample of the user, a fingerprint of the user, a secret key, a username and a password.

The communication profile may be predetermined by contract or preconfigured by the user, e.g. via a secure user interface with the data repository, for example a web interface for configuring desired communication profiles by a customer.

The network access entity 252 may be configured to enable establishment of a communication link with the UE 202 based on a default communication profile if the verification of the UE 203 with the user identifier 204 failed, for example a safe communication profile with limited services for protecting children. Alternatively, the network access entity 252 may be configured to disable establishment of a communication link with the UE 202 and/or to indicate an alert and/or warning message if the verification of the UE 203 with the user identifier 204 failed, for example for theft protection

The communication profile may comprise a mapping of at least one user identifier 204 with the identifier 203 of the UE 202. This means that multiple users can be assigned to a single UE. One or more users may also be assigned to multiple UEs, for example User A has a notebook and a smartphone and allows User B to also use his notebook (but not his smartphone).

In an exemplary implementation the following exemplary functionality can be implemented by the communication system 200 as described in Fig. 2:
The subscriber ID (e.g. (U)SIM ID) can be used and transmitted by the UE 202 for registration. Upon subsequent use of the UE 202 by a specific user (e.g., when unlocking the device or in a session setup), the new and the end user ID(s) will become the Subscriber ID with the NAS message (or in a higher application protocol layer - transferred directly to the UDR 260) as a tuple and processed. The AMF forwards this User IDs tuple to the UDR 260. The SMF 253 works according to policies assigned to the end-user ID tuple. In other words, the user's identification is extended by another checking component and independent of the subscription ID used by the UE when registering.

To register the users, these are assigned in advance to the Subscriber ID in the UDR 260 layer. The communication profiles of the users may be defined by contract. Customers can assign and configure the end user profiles belonging to their subscription via their own interfaces. In one embodiment, the invention also increases communication security: if an unauthorized user transmits an unknown user ID, communication can be prevented on the network side. In addition, a warning can be output on the network side. In this way, a theft of network entities can be avoided. Another possibility is to activate a default communication profile if the user ID is unknown (e.g. child protection filter).

This functionality provides the following advantages: The network access entity 252 provides, due to the additional user identifier that identifies the user of the UE, secure communication establishment, in particular for scenarios as described above related to 5G communication systems. The communication link with the UE is only establishment for the true, i.e. verified, user. Hence, misuse of the communication terminal, i.e. the UE, can be avoided as each time a communication with the UE is requested the user has to verify its identity. This provides safe communication and protects the user against misuse including theft protection.

An exemplary UE includes a processor which is configured to: transmit a communication request message 205 to an access network entity 252, e.g. an AMF entity of a network slice 250 of the communication system 200. The communication request message 205 comprises an identifier 203 of the UE 202 and a user identifier 204 identifying a user of the UE 202. The processor is configured to enable establishment of a communication link with the access network entity 252 based on a response from the access network entity 252 indicating a successful verification of the UE 203 with the user identifier 204 as described above.

Such a UE 202 may include: a camera configured to provide the user identifier 204 based on a picture of the user, in particular an iris-scan of the user; and/or a microphone configured to provide the user identifier 204 based on a speech sample of the user; and/or a touchpad configured to provide the user identifier 204 based on a fingerprint of the user; and/or an input configured to provide the user identifier 204 based on a secret key or a username and a password; and/or a scanner configured to provide the user identifier 204 based on a scan of an identity document, in particular an electronic identity document or based on a scan of a chip.

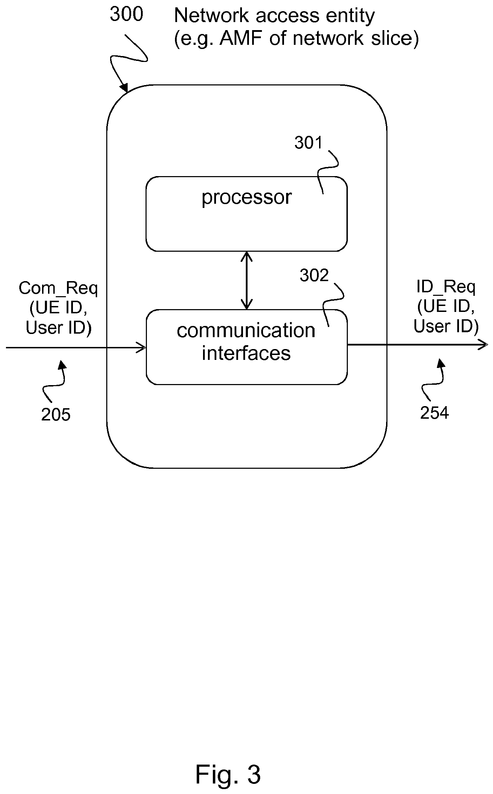

Fig. 3 shows a block diagram of an exemplary network access entity 300 according to the disclosure, e.g. an AFM entity 252 of a network slice 250 of the communication system 200, e.g. as described above with respect to Fig. 2. Such a network access entity 300 includes a processor 301 and one or more communication interfaces 302 for receiving messages from other network entities that are processed by the processor 301 and transmitting messages to other network nodes that are transmitted by the processor 301.

The processor 301 is configured to receive a communication request message 205 from a user equipment (UE) 202, e.g. as described above with respect to Fig. 2. The communication request message 205 comprises an identifier 203 of the UE 202, i.e. UE ID, and a user identifier 204 identifying a user of the UE 202, e.g. as described above with respect to Fig. 2. The processor 301 is configured to transmit an identification request message 254 to a data repository 260, in particular a unified data repository (UDR) of the network slice 250, e.g. as described above with respect to Fig. 2. The identification request message 254 comprises the identifier 203 of the UE 202 and the user identifier 204. The processor 301 is configured to obtain a verification of the UE 203 with the user identifier 204 from the data repository 260 and to enable establishment of a communication link with the UE 202 based on a successful verification, e.g. as described above with respect to Fig. 2.

The processor 301 can deny processing a communication request message 205 with an identifier 203 of the UE 202 for which no registration profile is stored in the data repository 260, e.g. as described above with respect to Fig. 2.

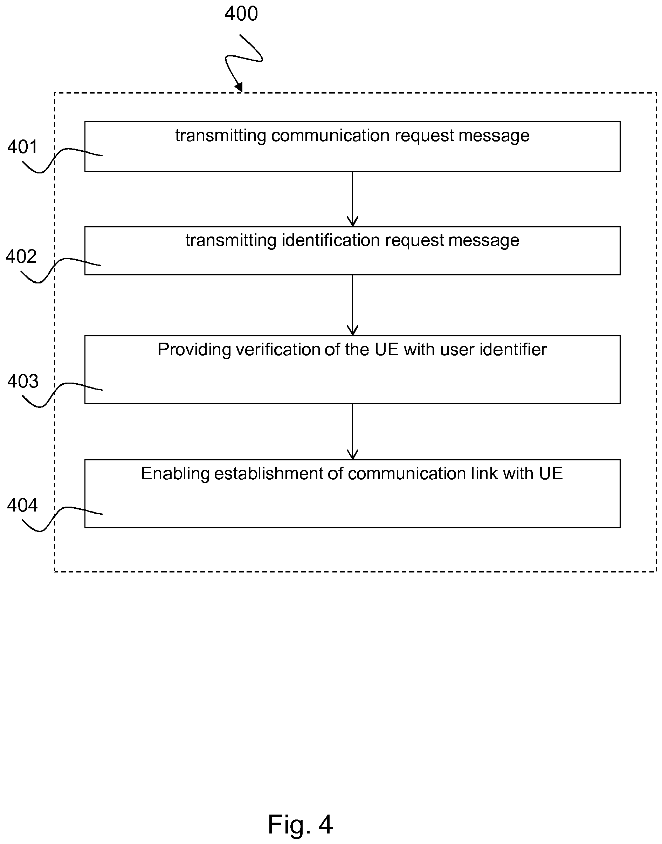

Fig. 4 shows a schematic diagram illustrating an exemplary method 400 for enabling establishment of a communication link with a User Equipment (UE) based on User Identification according to the disclosure. The method 400 may perform the technical functionalities as described above with respect to Figs. 2 and 3.

The method 400 includes transmitting, by a user equipment (UE), a communication request message 205 to an access network entity 252, in particular an AMF entity of a network slice 250 of a communication system 200, wherein the communication request message 205 comprises an identifier 203 of the UE 202 and a user identifier 204 identifying a user of the UE 202, e.g. as described above with respect to Figs. 2 and 3.

The method 400 includes transmitting, by the access network entity 252, an identification request message 254 to a data repository 260, in particular a unified data repository (UDR) of the network slice 250, e.g. as described above with respect to Fig. 2, wherein the identification request message 254 comprises the identifier 203 of the UE 202 and the user identifier 204, e.g. as described above with respect to Figs. 2 and 3.

The method 400 includes providing a verification of the UE 203 with the user identifier 204 based on a communication profile indicating a relation of the user identifier 204 with the identifier 203 of the UE 202, e.g. as described above with respect to Figs. 2 and 3. The method 400 further includes enabling establishment of a communication link with the UE based on a successful verification of the UE 203 with the user identifier 204, e.g. as described above with respect to Figs. 2 and 3.

The method 400 may further comprise establishing a communication session with the UE based on the user identifier 204, e.g. as described above with respect to Figs. 2 and 3. The method 400 may further comprise denying processing of a communication request message 205 with an identifier 203 of the UE 202 for which no registration profile is stored in the data repository 260, e.g. as described above with respect to Figs. 2 and 3.

The method 400 may include further steps, such as, for example, according to the method steps described above with reference to Figures 2 and 3.

Another aspect of the invention is related to a computer program product comprising program code for performing the method 400 or the functionalities described above, when executed on a computer or a processor. The method 400 may be implemented as program code that may be stored on a non-transitory computer medium. The computer program product may implement the techniques described above with respect to Figures 2 to 4.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A communication system (200), in particular a 5G communication system, comprising:
a network access entity (252), in particular an AMF entity of a network slice (250) of the communication system (200), configured to receive a communication request message (205) from a user equipment (UE), wherein the communication request message (205) comprises an identifier (203) of the UE (202) and a user identifier (204) identifying a user of the UE (202); and
a data repository (260), in particular a unified data repository (UDR) of the network slice (250), configured to receive an identification request message (254) from the network access entity (252), wherein the identification request message (254) comprises the identifier (203) of the UE (202) and the user identifier (204),
wherein the data repository (260) is configured to provide a verification of the UE (202) with the user identifier (204) based on a communication profile indicating a relation of the user identifier (204) with the identifier (203) of the UE (202),
wherein the network access entity (252) is configured to enable establishment of a communication link with the UE based on a successful verification of the UE (202) with the user identifier (204).

2. The communication system of claim 1,
wherein the network access entity (252) is configured to deny processing a communication request message (205) with an identifier (203) of the UE (202) for which no registration profile is stored in the data repository (260).

3. The communication system of claim 2,
wherein the data repository (260) is configured to store registration profiles of registered UEs independently from communication profiles of registered users.

4. The communication system of one of the preceding claims,
comprising a session initiation network entity (253), in particular an SMF entity of the network slice (250),
wherein the session initiation network entity (253) is configured to establish a communication session based on the user identifier (204).

5. The communication system of claim 4,
wherein the session initiation network entity (253) is configured to establish the communication session based on a policy obtained from the data repository (260), in particular from a policy control function (PCF) of the UDR of the network slice (250), which policy is related to the user identifier (204).

6. The communication system of one of the preceding claims, wherein the user identifier (204) comprises at least one of the following:
a picture of the user, in particular an iris-scan of the user,
a speech sample of the user,
a fingerprint of the user,
a secret key,
a username and a password,
a speech sample of the user.

7. The communication system of one of the preceding claims,
wherein the communication profile is predetermined by contract or preconfigured by the user via a secure user interface with the data repository (260).

8. The communication system of one of the preceding claims,
wherein the network access entity (252) is configured to enable establishment of a communication link with the UE based on a default communication profile if the verification of the UE (202) with the user identifier (204) failed.

9. The communication system of one of claims 1 to 7,
wherein the network access entity (252) is configured to disable establishment of a communication link with the UE and/or to indicate an alert and/or warning message if the verification of the UE (202) with the user identifier (204) failed.

10. The communication system of one of the preceding claims,
wherein the communication profile comprises a mapping of at least one user identifier (204) with the identifier (203) of the UE (202).

11. A method for enabling establishment of a communication link with a User Equipment (UE) based on User Identification, the method comprising:
transmitting, by a user equipment (UE), a communication request message (205) to an access network entity (252), in particular an AMF entity of a network slice (250) of a communication system (200), wherein the communication request message (205) comprises an identifier (203) of the UE (202) and a user identifier (204) identifying a user of the UE (202);
transmitting, by the access network entity (252), an identification request message (254) to a data repository (260), in particular a unified data repository (UDR) of the network slice (250), wherein the identification request message (254) comprises the identifier (203) of the UE (202) and the user identifier (204);
providing a verification of the UE (202) with the user identifier (204) based on a communication profile indicating a relation of the user identifier (204) with the identifier (203) of the UE (202); and
enabling establishment of a communication link with the UE based on a successful verification of the UE (202) with the user identifier (204).

12. The method of claim 11, comprising:
denying processing of a communication request message (205) with an identifier (203) of the UE (202) for which no registration profile is stored in the data repository (260).

13. A user equipment (UE), comprising a processor, configured to:
transmit a communication request message (205) to an access network entity (252), in particular an AMF entity of a network slice (250) of a communication system (200), wherein the communication request message (205) comprises an identifier (203) of the UE (202) and a user identifier (204) identifying a user of the UE (202); and
enable establishment of a communication link with the access network entity (252) based on a response from the access network entity (252) indicating a successful verification of the UE (202) with the user identifier (204).

14. The UE of claim 13, comprising:
a camera configured to provide the user identifier (204) based on a picture of the user, in particular an iris-scan of the user; and/or
a microphone configured to provide the user identifier (204) based on a speech sample of the user; and/or
a touchpad configured to provide the user identifier (204) based on a fingerprint of the user; and/or
an input configured to provide the user identifier (204) based on a secret key or a username and a password; and/or
a scanner configured to provide the user identifier (204) based on a scan of an identity document, in particular an electronic identity document or based on a scan of a chip.

15. A network access entity (300, 252), in particular an AMF entity of a network slice (250) of a communication system (200), comprising a processor (301) configured to:
receive a communication request message (205) from a user equipment (UE), wherein the communication request message (205) comprises an identifier (203) of the UE (202) and a user identifier (204) identifying a user of the UE (202);
transmit an identification request message (254) to a data repository (260), in particular a unified data repository (UDR) of the network slice (250), wherein the identification request message (254) comprises the identifier (203) of the UE (202) and the user identifier (204);
obtain a verification of the UE (202) with the user identifier (204) from the data repository (260); and
enable establishment of a communication link with the UE based on a successful verification.

## Amended claims

### Amended claims in accordance with Rule 137(2) EPC.

1. A communication system (200) comprising:
a network access entity (252) of the communication system (200), configured to receive a communication request message (205) from a user equipment, UE, wherein the communication request message (205) comprises an identifier (203) of the UE (202) and a user identifier (204) identifying a specific user of a plurality of users using the UE (202);
a data repository (260) configured to receive an identification request message (254) from the network access entity (252), wherein the identification request message (254) comprises the identifier (203) of the UE (202) and the user identifier (204),
wherein the data repository (260) is configured to provide a verification of the UE (202) with the user identifier (204) based on a communication profile indicating a relation of the user identifier (204) with the identifier (203) of the UE (202),
wherein the network access entity (252) is configured to enable establishment of a communication link with the UE based on a successful verification of the UE (202) with the user identifier (204); and
a session initiation network entity (253) configured to establish a communication session based on a policy obtained from the data repository (260) related to the user identifier (204),
wherein a first policy related to a first user identifier of a first user of the UE (202) enables more services than a second policy related to a second user identifier of a second user of the UE (202).

2. The communication system of claim 1,
wherein the network access entity (252) is configured to deny processing a communication request message (205) with an identifier (203) of the UE (202) for which no registration profile is stored in the data repository (260).

3. The communication system of claim 2,
wherein the data repository (260) is configured to store registration profiles of registered UEs independently from communication profiles of registered users.

4. The communication system of one of the preceding claims,
wherein the policy is obtained from a policy control function (PCF) of the UDR of the network slice (250).

5. The communication system of one of the preceding claims, wherein the user identifier (204) comprises at least one of the following:
a picture of the user or an iris-scan of the user,
a speech sample of the user,
a fingerprint of the user,
a secret key,
a username and a password,
a speech sample of the user.

6. The communication system of one of the preceding claims,
wherein the communication profile is predetermined by contract or preconfigured by the user via a secure user interface with the data repository (260).

7. The communication system of one of the preceding claims,
wherein the network access entity (252) is configured to enable establishment of a communication link with the UE based on a default communication profile if the verification of the UE (202) with the user identifier (204) failed.

8. The communication system of one of claims 1 to 7,
wherein the network access entity (252) is configured to disable establishment of a communication link with the UE and/or to indicate an alert and/or warning message if the verification of the UE (202) with the user identifier (204) failed.

9. The communication system of one of the preceding claims,
wherein the communication profile comprises a mapping of at least one user identifier (204) with the identifier (203) of the UE (202).

10. A method for enabling establishment of a communication link with a User Equipment, UE, based on User Identification, the method comprising:
transmitting, by a user equipment (UE), a communication request message (205) to an access network entity (252) of a communication system (200), wherein the communication request message (205) comprises an identifier (203) of the UE (202) and a user identifier (204) identifying a specific user of a plurality of users using the UE (202);
transmitting, by the access network entity (252), an identification request message (254) to a data repository (260), wherein the identification request message (254) comprises the identifier (203) of the UE (202) and the user identifier (204);
providing a verification of the UE (202) with the user identifier (204) based on a communication profile indicating a relation of the user identifier (204) with the identifier (203) of the UE (202);
enabling establishment of a communication link with the UE based on a successful verification of the UE (202) with the user identifier (204); and
establishing, by a session initiation network entity (253), a communication session based on a policy obtained from the data repository (260) related to the user identifier (204),
wherein a first policy related to a first user identifier of a first user of the UE (202) enables more services than a second policy related to a second user identifier of a second user of the UE (202).

11. The method of claim 10, comprising:
denying processing of a communication request message (205) with an identifier (203) of the UE (202) for which no registration profile is stored in the data repository (260).

12. A user equipment, UE, comprising a processor, configured to:
transmit a communication request message (205) to an access network entity (252) of a communication system (200), wherein the communication request message (205) comprises an identifier (203) of the UE (202) and a user identifier (204) identifying a specific user of a plurality of users using the UE (202); and
enable establishment of a communication link with the access network entity (252) based on a response from the access network entity (252) indicating a successful verification of the UE (202) with the user identifier (204),
wherein the establishment of the communication link comprises establishing, by a session initiation network entity (253), a communication session based on a policy obtained from a data repository (260) related to the user identifier (204),
wherein a first policy related to a first user identifier of a first user of the UE (202) enables more services than a second policy related to a second user identifier of a second user of the UE (202).

13. The UE of claim 12, comprising:
a camera configured to provide the user identifier (204) based on a picture of the user or an iris-scan of the user; and/or
a microphone configured to provide the user identifier (204) based on a speech sample of the user; and/or
a touchpad configured to provide the user identifier (204) based on a fingerprint of the user; and/or
an input configured to provide the user identifier (204) based on a secret key or a username and a password; and/or
a scanner configured to provide the user identifier (204) based on a scan of an identity document or a scan of an electronic identity document or based on a scan of a chip.

14. A network access entity (300, 252) of a communication system (200), comprising a processor (301) configured to:
receive a communication request message (205) from a user equipment, UE, wherein the communication request message (205) comprises an identifier (203) of the UE (202) and a user identifier (204) identifying a specific user of a plurality of users using the UE (202);
transmit an identification request message (254) to a data repository (260), wherein the identification request message (254) comprises the identifier (203) of the UE (202) and the user identifier (204);
obtain a verification of the UE (202) with the user identifier (204) from the data repository (260); and
enable establishment of a communication link with the UE based on a successful verification,
wherein the establishment of the communication link comprises establishing, by a session initiation network entity (253), a communication session based on a policy obtained from the data repository (260) related to the user identifier (204),
wherein a first policy related to a first user identifier of a first user of the UE (202) enables more services than a second policy related to a second user identifier of a second user of the UE (202).
